# EUROPÄISCHE PATENTSCHRIFT

(11) **EP 3 178 691 B1**
(45) Veröffentlichungstag und Bekanntmachung des Hinweises auf die Patenterteilung: **22.04.2020**
(21) Anmeldenummer: 16199638.4
(22) Anmeldetag: 18.11.2016
(51) Int. Cl.: B60N 2/50, B60N 2/54

(54) **FEDERUNGSVORRICHTUNG**
SUSPENSION DEVICE
SYSTÈME DE SUSPENSION

(30) Priorität: 10.12.2015 DE 102015121526
(43) Veröffentlichungstag der Anmeldung: 14.06.2017
(73) Patentinhaber: GRAMMER AG, 92224 Amberg (DE)
(72) Erfinder: Lorey, Konstantin, 92546 Schmidgaden (DE); Deml, Johann, 92554 Thanstein (DE)
(74) Vertreter: Hannke, Christian

(56) Entgegenhaltungen:
- DE-U- 1 896 880
- DE-U- 7 113 072
- JP-A- S5 812 840
- US-A- 2 840 140

## Beschreibung

Die Erfindung betrifft eine Federungsvorrichtung, insbesondere für einen Fahrzeugsitz, umfassend ein Federungsoberteil und ein Federungsunterteil, welche durch eine erste Verbindungsschwinge und eine zweite Verbindungsschwinge miteinander verbindbar sind.

Es sind aus dem Stand der Technik derartige Federungsvorrichtungen für Fahrzeugsitze bekannt, wobei das Federungsoberteil, das Federungsunterteil, die erste und die zweite Verbindungsschwinge ein Parallelogramm bilden, so dass das Federungsoberteil parallel zu dem Federungsunterteil auch im Falle einer Federbewegung ist. Die Federungsvorrichtungen umfassen zur Federung des Fahrzeugsitzes vorzugsweise eine Feder, wobei die Ausschubkraft der Federungsvorrichtung durch Spannung der Feder verstellt werden kann.

Wenn sich jedoch ein relativ schwerer Fahrer auf dem Fahrzeugsitz niederlässt und die Ausschubkraft entsprechend seines Gewichtes einstellen möchte, muss er die Vorspannung der Feder deutlich erhöhen, was einen erheblichen Kraftaufwand bedeutet und hierdurch auch eine schnelle Verstellung nicht gegeben ist.

DE 71 13 072 U zeigt eine Parallelogrammfederung, wobei eine Feder einerseits mit einem Winkelarm und andererseits mit einem Sitzfuß verbunden ist. Die Querstange, an welcher die Feder mit einem Ende verbunden ist, ist mittels eines Stellmechanismus entlang Längsschlitzen verlagerbar, so dass die Position der Feder und entsprechend die Federkraft veränderbar ist.

JP S58 12840 A offenbart eine weitere Federungsvorrichtung aus dem Stand der Technik.

Es ist demzufolge Aufgabe der vorliegenden Erfindung, eine Federungsvorrichtung bereitzustellen, mittels welcher schnell und mit wenig Kraftaufwand eine Verstellung der Ausschubkraft durchführbar ist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Federungsvorrichtung, insbesondere für Fahrzeugsitze, bereitzustellen, umfassend ein Federungsoberteil und ein Federungsunterteil, welche durch eine erste Verbindungsschwinge und eine zweite Verbindungsschwinge miteinander verbindbar sind, wobei eine erste Federeinheit mit einem ersten Endbereich einerseits mittels einer Verstelleinrichtung mit der ersten Verbindungsschwinge und mit einem zweiten Endbereich andererseits mit dem Federungsunterteil verbindbar ist, wobei mittels der Verstelleinrichtung eine Position der ersten Federeinheit verstellbar ist, um eine Ausschubkraft der Federungsvorrichtung zu ändern.

Unter dem Begriff "Federeinheit" wird eine Einheit verstanden, die zumindest eine Feder im herkömmlichen Sinne umfasst. Eine Federeinheit bzw. eine Feder kann mechanisch oder hydraulisch oder pneumatisch ausgestaltet sein. Vorteilhaft kann die Feder auch als die Federeinheit selbst verstanden werden. Bei dieser Feder handelt es sich vorzugsweise um eine Zugfeder, die auf vielfältige Weise ausgestaltet sein kann. Durch eine mechanische Ausbildung kann das Gewicht der Federungsvorrichtung weiter reduziert werden und ein einfacherer Aufbau bereitgestellt werden.

Gemäß einer bevorzugten Ausführungsform umfasst die Federungsvorrichtung mehr als eine Federeinheit, also zusätzlich zu der ersten Federeinheit noch eine zweite, dritte, usw. Federeinheit, wobei jede Federeinheit mindestens eine Feder umfasst, so dass die Bauhöhe der Federungsvorrichtung hierdurch noch weiter reduziert werden kann, da eine auf die Federungsvorrichtung eingeleitete Kraft von zwei oder mehr Federn aufgenommen werden kann. Die Federn können also hierdurch kleiner dimensioniert werden. Besonders vorteilhaft ist es, zwei Federn für die Federungsvorrichtung vorzusehen. Es können aber auch eine beliebige Anzahl von Federn, insbesondere drei oder mehr, vorgesehen sein.

Der erste und der zweite Endbereich der Federeinheit sind hierbei vorzugsweise das erste und das zweite Ende der Feder, wobei besonders bevorzugt das erste und/oder das zweite Ende der Feder eine Öse aufweisen, so dass die Feder bzw. die Federeinheit leicht in dazu vorgesehene Öffnungen oder Vorrichtungen eingehängt bzw. aufgehängt werden können.

Erfindungsgemäß wird die Federrate und die Ausschubkraft der Federungsvorrichtung gemäß Anspruch 1 mittels einer Verstellung der Position der ersten Federeinheit und nicht mittels einer Veränderung der Federspannung der Federeinheit, also insbesondere der Feder, geändert.

Eine Verstellung der Position ist hierbei gleichbedeutend mit einer Lageänderung der Federeinheit im Raum. Durch die Positionsveränderung der Federeinheit bzw. der Feder der Federeinheit wird ein an der Federeinheit angreifender Hebel in seiner Länge verändert.

Gemäß einer bevorzugten Ausführungsform ist es besonders vorteilhaft, wenn der erste Endbereich der ersten Federeinheit mittels der Verstelleinrichtung in einer Position verstellbar ist, wobei eine Position des zweiten Endbereichs im Wesentlichen konstant ist.

Dies hat zur Folge, dass mittels der Verstelleinrichtung insbesondere die Position bzw. Lage des ersten Endbereichs der ersten Federeinheit verstellbar ist. Insbesondere wird dadurch der erste Endbereich relativ zu dem Federungsunterteil, welches vorzugsweise starr mit einem Boden, einer Karosserie oder dergleichen verbindbar ist, verstellt. Der an der ersten Federeinheit angreifende Hebel erstreckt sich dabei von einer ersten Schwenkachse der ersten Verbindungsschwinge mit dem Federungsunterteil bis zu dem ersten Endbereich der Federeinheit. Durch Verstellung bzw. Verschieben des ersten Endbereichs der Federeinheit ist die Länge des Hebels veränderbar, so dass hierdurch die Federrate und die Ausschubkraft der Federungsvorrichtung veränderbar ist. Der erste Endbereich umfasst also entsprechend den Krafteinleitungspunkt der Federeinheit.

Die Ausschubkraft wird aufgrund des folgenden Zusammenhangs verändert. Wie bekannt ist, ist ein Drehmoment proportional zu der Länge eines Hebels, wenn die angreifende Kraft konstant ist. Durch Verstellung der Position des ersten Endbereichs wird die Länge des Hebels verändert. Sitzt ein verhältnismäßig schwerer Fahrer auf dem Fahrzeugsitz, der über die erfindungsgemäße Federungsvorrichtung verfügt, so muss der Hebel entsprechend länger sein als bei einem leichten Fahrer.

Dadurch, dass erfindungsgemäß nicht die Federspannung zur Veränderung der Ausschubkraft verändert wird, sondern nur die Lage der Federeinheit verändert wird, ist lediglich eine geringe Kraft seitens eines Benutzers notwendig, um die Ausschubkraft der Federungsvorrichtung zu verändern. Hierdurch wird auch eine sehr schnelle Verstellung der Ausschubkraft ermöglicht.

Gemäß einer bevorzugten Ausführungsform kann die Federungsvorrichtung mindestens einen Dämpfer aufweisen. Vorzugsweise sind ein erster Endbereich des Dämpfers mit der Verstelleinrichtung und ein zweiter Endbereich des Dämpfers mit dem Federungsunterteil verbunden. Hierdurch kann erreicht werden, dass die Dämpferleistung des Dämpfers und dadurch die Dämpferleistung der Federung bei Verstellung der Ausschubkraft entsprechend automatisch an das Fahrergewicht mit angepasst wird. Wird der Hebel verlängert, so erhöht sich als entsprechend auch der Hub des Dämpfers und der wirksame Hebel für eine Dämpferkraftanleitung. Entsprechend wird bei einer Verkürzung des Hebels der Hub des Dämpfers verringert.

Die Kinematik der Federungsvorrichtung kann gemäß einer besonders bevorzugten Ausführungsform weiter verbessert werden, wenn die Länge der ersten Verbindungsschwinge nicht gleich der Länge der zweiten Verbindungsschwinge ist. Vorzugsweise ist die Länge der zweiten Verbindungsschwinge größer als die Länge der ersten Verbindungsschwinge.

Dadurch ist das Federungsoberteil nicht mehr parallel zu dem Federungsunterteil angeordnet, das heißt also, dass das Federungsoberteil, das Federungsunterteil sowie die erste und zweite Verbindungsschwinge kein Parallelogramm mehr wie aus dem Stand der Technik bekannt ausbilden. Diese Anordnung wird synonym als "falsches Parallelogramm" verstanden.

Gemäß dieser Ausführungsform erhöht sich dadurch die Höhe der Federungsvorrichtung, allerdings nur um einen geringen Anteil. Bisherige Federungsvorrichtungen mit einer Parallelogrammanordnung weisen beispielsweise eine Höhe von etwa 58 mm auf, wohingegen die Federungsvorrichtung mit dem falschen Parallelogramm eine Höhe von etwa 62 mm aufweist.

Durch die Umwandlung der Paralellogrammform zu einer falschen Parallelogrammform ergibt sich lediglich eine geringe Höhenänderung, jedoch eine deutlich verbesserte Kinematik der Federungsvorrichtung, wie im Folgenden näher dargestellt wird.

Dabei ist die erste Verbindungsschwinge mittels der ersten mit dem Federungsunterteil und mittels einer dritten Schwenkachse mit dem Federungsoberteil verbindbar. Die zweite Verbindungsschwinge ist mittels einer zweiten Schwenkachse mit dem Federungsunterteil und mittels einer vierten Schwenkachse mit dem Federungsoberteil verbindbar.

Wie bereits angemerkt, ist das Federungsoberteil nicht mehr parallel gegenüber dem Federungsunterteil, es bilden das Federungsoberteil und das Federungsunterteil einen Winkel gegeneinander, wobei der Winkel abhängig von einer Höhe des Federungsoberteils ist.

Die Kraftrichtung erstreckt sich in beiden Fällen zwischen der dritten und der vierten Schwenkachse, da die Kraft über diese dritte und vierte Schwenkachse auf die Verbindungsschwingen sowie dem Federungsunterteil eingeleitet wird. Dadurch, dass die zweite Verbindungsschwinge länger als die erste Verbindungsschwinge ausgestaltet ist, verändert sich die Lage der Kraftrichtung des falschen Parallelogramms gegenüber dem echten Parallelogramm. Dadurch erhöht sich auch der Krafthebel, der senkrecht zu der Kraftrichtung ist und durch die zweite Schwenkachse verläuft des falschen Parallelogramms gegenüber dem echten Parallelogramm. Hierdurch werden die Gelenkkräfte, insbesondere die des Federungsunterteils, und die Reibung reduziert sowie die Ausschubkraft der Federung erhöht. Insbesondere sind die Federrate und die Federkennlinie abhängig von einer Gewichtsposition des Fahrers gegenüber dem Federungsoberteils.

Dadurch, dass die Federrate und die Federkennlinie abhängig von der Gewichtsposition des Fahrers sind, ist es gemäß einer bevorzugten Ausführungsform möglich, die Verstellung der Federrate durch eine Verschiebung des Fahrergewichts in Fahrzeugsitzlängsrichtung zu ermöglichen. Dabei kann insbesondere ausgenutzt werden, dass ein leichter Fahrer im Allgemeinen kleiner ist als ein schwerer Fahrer, so dass der leichte Fahrer in Fahrzeugsitzlängsrichtung weiter vorne sitzt als ein schwerer Fahrer.

Insgesamt ist es also möglich, die Federkennlinie sehr progressiv auszulegen, wodurch Anschlagspuffer für die Federungsvorrichtung weggelassen werden können.

Die Verstelleinrichtung ist wie folgt ausgebildet.

Die Verstelleinrichtung weist erfindungsgemäß einen relativ zur ersten Verbindungsschwinge ortsfesten Drehhebel auf, welcher um eine erste Drehachse, die ebenfalls relativ zur ersten Verbindungsschwinge ortsfest ist, drehbar gelagert ist. Weiter weist die Verstelleinrichtung ein Verstellelement auf, welches mit der ersten Drehachse verbunden ist und bei einer Verstellung entlang einer Verlagerungsachse verlagerbar ist. Die Verlagerungsachse kann dabei besonders bevorzugt die erste Drehachse sein.

Darüber hinaus ist erfindungsgemäß an diesem Verstellelement mittels einer zweiten Drehachse ein erstes Hebelelement schwenkbar angeordnet, wobei an diesem ersten Hebelelement ein zweites Hebelelement mittels einer dritten Drehachse schwenkbar angeordnet und das zweite Hebelelement mittels einer vierten Drehachse schwenkbar mit der ersten Verbindungsschwinge verbunden ist.

Die Federeinheit und insbesondere die Feder sind hierbei mit dem zweiten Hebelelement der Verstelleinrichtung zumindest wirkverbunden.

Mittels einer derartigen Anordnung kann demnach die Federeinheit in seiner Lage bzw. Position verändert werden.

Natürlich sind auch noch weitere Verstelleinrichtungen denkbar, die hier jedoch nicht weiter ausgeführt werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: Die Federungsvorrichtung mit einem echten Parallelogramm und einem Fahrzeugsitz;
- Fig. 1B: Die Federungsvorrichtung mit einem falschen Parallelogramm und einem Fahrzeugsitz;
- Fig. 2A: Die Federungsvorrichtung gemäß Figur 1A;
- Fig. 2B: Die Federungsvorrichtung gemäß Figur 1B;
- Fig. 3A: Die Federungsvorrichtung gemäß einer Ausführungsform in einer perspektivischen Ansicht;
- Fig. 3B: Die Federungsvorrichtung mit einer Verstelleinrichtung gemäß einer Ausführungsform in einer perspektivischen Ansicht;
- Fig. 3C: Die Federungsvorrichtung gemäß Figuren 3A und 3B in einer Seitenansicht;
- Fig. 3D: Eine Verstelleinrichtung gemäß einer weiteren bevorzugten Ausführungsform;
- Fig. 4A: Die Federungsvorrichtung mit einer Verstelleinrichtung gemäß Figur 3A in einer Seitenansicht;
- Fig. 4B: Die Federungsvorrichtung gemäß Figur 4A in einer Draufsicht;
- Fig. 5A: Die Federungsvorrichtung mit einer Verstelleinrichtung gemäß Figur 3D in einer Seitenansicht;
- Fig. 5B: Die Federungsvorrichtung gemäß Figur 5A in einer Draufsicht;
- Fig. 6A, 6B: Die Federungsvorrichtung mit einer Feder in verschiedenen Verstellpositionen;
- Fig. 7A, 7B: Die Kennlinie der Federungsvorrichtung für einen leichten und einen schweren Fahrer;
- Fig. 8A, 8B: Die Kennlinie für die Federungsvorrichtung gemäß einer Ausführungsform mit falschem Parallelogramm für einen leichten und schweren Fahrer, die vorne sitzen;
- Fig. 8C: Die Kennlinie für die Federungsvorrichtung gemäß Figuren 8A, 8B für einen schweren Fahrer, der hinten sitzt.

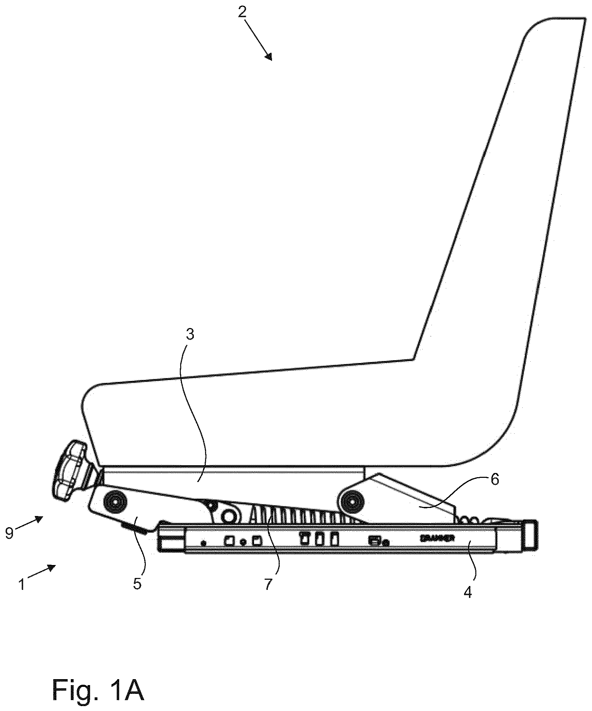

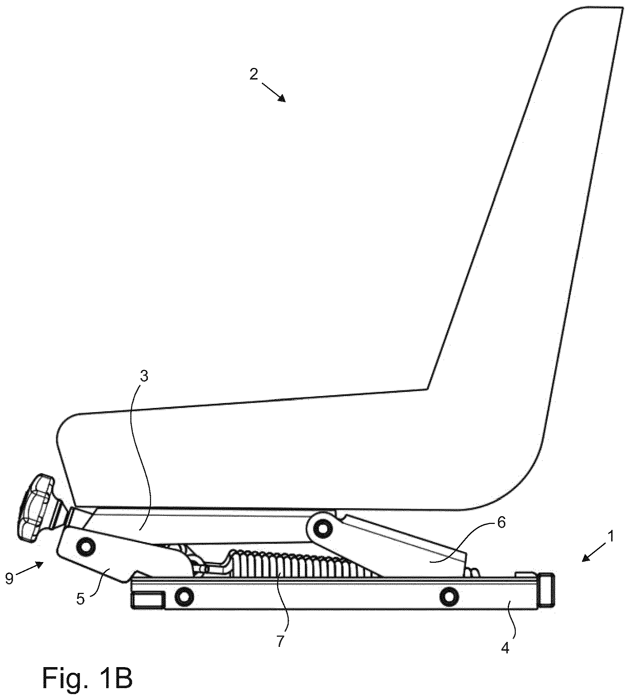

Die in den Figuren 1A und 1B gezeigten Federungsvorrichtungen 1 umfassen ein Federungsoberteil 3, ein Federungsunterteil 4, eine erste Verbindungsschwinge 5 und eine zweite Verbindungsschwinge 6. Das Federungsoberteil 3 ist hierbei in einem vorderen Bereich 3' mittels einer dritten Schwenkachse 13 mit der ersten Verbindungsschwinge 5 und in einem hinteren Bereich 3" mittels einer vierten Schwenkachse 14 mit der zweiten Verbindungsschwinge 6 verbunden. Das Federungsunterteil 4 ist dabei in einem vorderen Bereich 4' mittels einer ersten Schwenkachse 11 mit der ersten Verbindungsschwinge 5 verbunden und in einem hinteren Bereich 4" mittels einer zweiten Schwenkachse 12 mit der zweiten Verbindungsschwinge 6 verbunden.

Dabei zeigt die Figur 1A die Federungsvorrichtung 1 mit einem echten Parallelogramm und die Figur 1B die Federungsvorrichtung 1 mit einem falschen Parallelogramm.

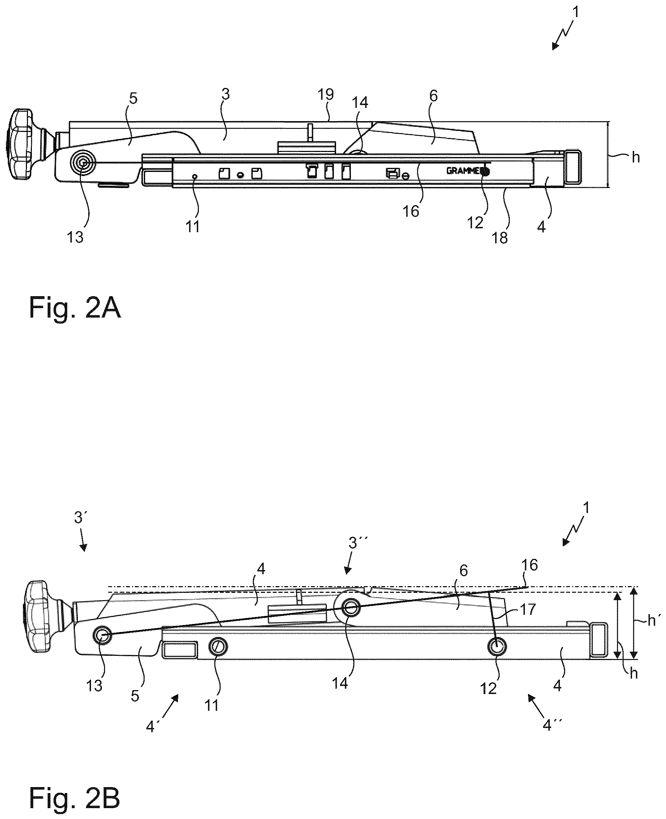

Der Unterschied zwischen dem echten und dem falschen Parallelogramm wird deutlicher in den Figuren 2A und 2B dargestellt, wobei die Figur 2A die Federungsvorrichtung 1 mit dem echten Parallelogramm und die Figur 2B die Federungsvorrichtung 1 mit dem falschen Parallelogramm zeigt, wobei in der Figur 2B die zweite Verbindungsschwinge 6 länger ausgestaltet ist als die erste Verbindungsschwinge 5, wobei insbesondere die Länge zwischen der zweiten 12 und vierten Schwenkachse 14 länger ist als die Länge zwischen der ersten 11 und der dritten Schwenkachse 13. Insbesondere sind die Eckpunkte des echten als auch des falschen Parallelogramms durch die erste, zweite, dritte und vierte Schwenkachse ausgebildet.

Wie aus dem Vergleich der Figuren 2A und 2B deutlich zu erkennen ist, ist das Federungsoberteil 3 zumindest in der gezeigten unteren Stellung nicht mehr parallel zu dem Federungsunterteil 4. Weiter ist zu erkennen, dass jedoch die insgesamte Höhe h der Federungsvorrichtung 1 nur geringfügig auf die Höhe h' angewachsen ist. Die Höhen h bzw. h' werden als der Abstand zwischen einer Unterseite 18 des Federungsunterteils 4 und einer Oberseite 19 des Federungsoberteils 3 gemessen.

Gemäß der Figur 2B ist jedoch wie zuvor beschrieben die Oberseite 19 des Federungsoberteils 3 in der unteren Stellung nicht mehr parallel zu der Unterseite 18 des Federungsunterteils 4, so dass die Höhe zwischen der Unterseite 18 und dem höchsten Punkt der Oberseite 19, gesehen in Fahrzeugsitzhöhenrichtung H nach oben, gemessen wird.

Jedoch hat diese geringfügige Änderung des echten Parallelogramms hin zu dem falschen Parallelogramm eine entscheidende Auswirkung auf die Federungsvorrichtung 1.

Durch die Verlängerung der zweiten Verbindungsschwinge 6, insbesondere durch die Verlängerung des Abstandes zwischen der zweiten 12 und vierten Schwenkachse 14, wird das Federungsoberteil 3 so in seiner Position bzw. Lage verändert, dass das Federungsoberteil 3, insbesondere die Oberseite 19 des Federungsoberteils 3, nicht mehr parallel zu dem Federungsunterteil 4, insbesondere der Unterseite 18 des Federungsunterteils 4 ist. Hierdurch wird die Kraftrichtung 16 ebenfalls in seiner Lage verändert, da die Kraftrichtung 16 durch die die dritte 13 und die vierte Schwenkachse 14 definiert ist. Wie aus einem Vergleich der Figuren 2A und 2B zu erkennen ist, ändert sich aufgrund der Lageänderung der Kraftrichtung 16 auch der Krafthebel 17, der senkrecht zu der Kraftrichtung 16 durch die zweite Schwenkachse 12 verlaufend angeordnet ist. Dadurch, dass dieser Krafthebel 17 durch die geringfügig Verlängerung der zweiten Verbindungsschwinge 6 verlängert wird, werden Gelenkkräfte, insbesondere im Bereich des Federungsunterteils 4, und die Reibungskräfte verringert. Darüber hinaus ist, da das Federungsoberteil 3 nicht mehr parallel zu dem Federungsunterteil 4 ausgebildet ist, eine Federkennlinie der Federungsvorrichtung 1 und auch eine Federrate und eine Ausschubkraft von der tatsächlichen Gewichtsposition gegenüber dem Federungsoberteil abhängig.

Es ist daher möglich, die Federkennlinie der Federungsvorrichtung 1 sehr progressiv auszulegen. Ein schwererer Fahrzeugführer ist im Allgemeinen in seiner Körpergröße auch größer, so dass ein schwerer Fahrzeugführer weiter hinten auf dem Fahrzeugsitz 2 Platz nehmen wird. Die Federrate der Federungsvorrichtung 1 ist dann bei einem schwereren Fahrer größer als die Federrate für einen leichteren und kleineren Fahrer. Es ist dadurch eine automatische Anpassung der Federrate der Federungsvorrichtung 1 an das Gewicht des Fahrers denkbar.

Nachfolgend wird die Wirkungsweise der Verstelleinrichtung 9 genauer dargestellt.

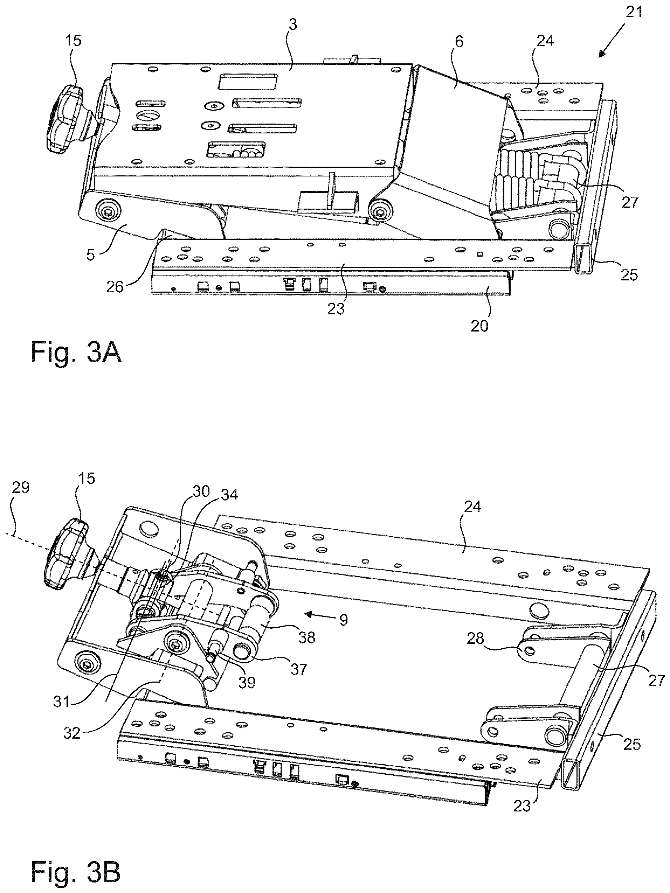

Die Figur 3A zeigt hierbei den Aufbau der Federungsvorrichtung 1 in einer perspektivischen Ansicht. Das Federungsunterteil 4 weist hierbei eine Linearverschiebeeinrichtung 20 auf, so dass die Federungsvorrichtung 1 in Längsrichtung L linear verschiebbar ist.

Der Aufbau für die Federungseinrichtung 1 mit einem echten Parallelogramm entspricht baulich dem mit einem falschen Parallelogramm, wobei sich lediglich die zweite Verbindungsschwinge 6 unterscheidet. Die anderen baulichen Komponenten sind im Wesentlichen gleich ausgebildet. Weiter ist der Drehhebel 15 der Verstelleinrichtung zu erkennen, sowie eine Aufhängevorrichtung 21, mittels welcher Federn der Federungsvorrichtung 1 und Dämpfer 22 (hier nicht gezeigt) mit dem Federungsunterteil 4 verbindbar sind.

Das Federungsunterteil 4 umfasst zwei Längselemente 23, 24, die sich jeweils in Längsrichtung L erstrecken und zwei Querelemente 25, 26, die sich in eine Breitenrichtung B erstrecken.

Die Aufhängevorrichtung 21, die vorliegend in dem hinteren Bereich 4" des Federungsunterteils 4 angeordnet ist, umfasst dabei ein erstes Aufhängeelement 27, das in Breitenrichtung B erstreckend angeordnet ist und röhrenförmig ausgestaltet ist, wobei auch andere Ausgestaltungen möglich sind, beispielsweise vierkantförmig oder sechskantförmig. Jedoch ist eine röhrenförmige Ausgestaltung bevorzugt, da sich Ösen von Federn (hier nicht gezeigt) besonders gut gehalten werden können. Ferner weist die Aufhängevorrichtung 21 mindestens ein erstes Dämpferaufhängeelement 28 auf, mittels welchem ein Ende eines Dämpfers 22 mit dem Federungsunterteil 4 verbindbar ist.

Die Figur 3B zeigt dabei eine erste Ausführungsform der Verstelleinrichtung 9. Wie erkennbar ist, umfasst die Verstelleinrichtung 9 einen um eine erste Drehachse 29 drehbaren Drehhebel 15 auf, wobei vorzugsweise sowohl der Drehhebel 15 als auch die erste Drehachse 29 relativ zu der ersten Verbindungsschwinge 5 ortsfest angeordnet sind. Ortsfest bedeutet hierbei, dass die Lage des Bauteils konstant ist, Drehungen jedoch zugelassen sind. Die Drehbewegung der Achse 29 wird mittels zweier Kegelzahnräder (hier nicht gezeigt) auf die Achse 30 übertragen. Natürlich sind auch noch andere Ausgestaltungen zur Übertragung der Drehbewegung denkbar.

Weiter umfasst die Verstelleinrichtung 9 ein Verstellelement 33, welches mit der ersten Drehachse 29 verbindbar ist und bei einer Verstellung entlang einer Verlagerungsachse 35 verlagerbar ist. Die Verlagerungsachse 35 entspricht gemäß der gezeigten Ausführungsform der Achse einer Gewindestange 34 und ist senkrecht zu der ersten Drehachse 29 angeordnet.

Darüber hinaus ist an dem Verstellelement 33 mittels einer zweiten Drehachse 30 ein erstes Hebelelement 36 schwenkbar angeordnet, wobei an diesem ersten Hebelelement 36 ein zweites Hebelelement 37 mittels einer dritten Drehachse 31 schwenkbar angeordnet ist und das zweite Hebelelement 37 mittels einer vierten Drehachse 32 schwenkbar mit der ersten Verbindungsschwinge 5 verbindbar ist.

Dabei ist an dem zweiten Hebelelement 37 ein zweites Aufhängeelement 38 zum Aufhängen einer Öse einer Feder angeordnet. Vorzugsweise ist an dem zweiten Hebelelement 37 auch ein zweites Dämpferaufhängeelement 39 befestigt.

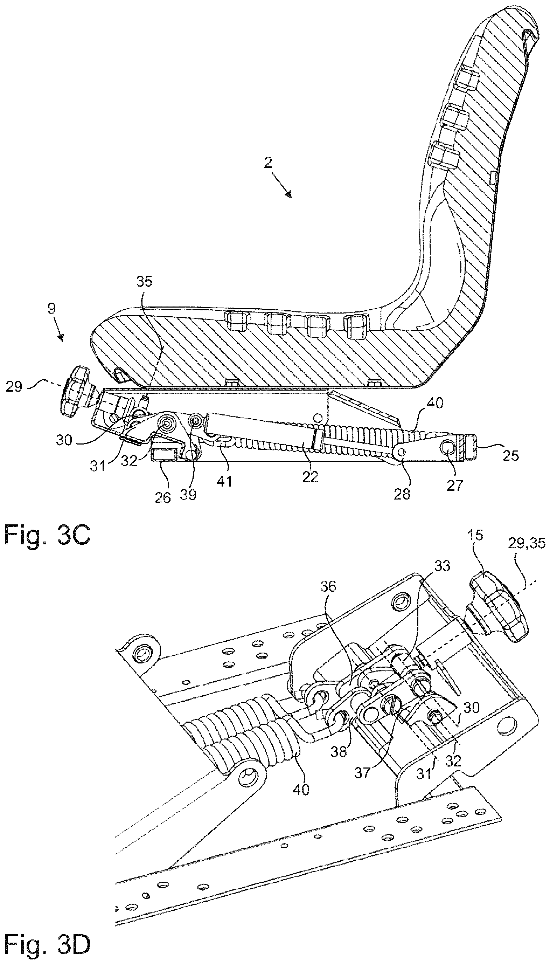

Die Figur 3C zeigt die in den Figuren 3A und 3B gezeigte Ausführungsform einer Federungsvorrichtung 1 in einer Seitenansicht mit einem Dämpfer 22 und einer Feder 40.

In der Figur 3D wird eine weitere Ausführungsform für die Verstelleinrichtung 9 gezeigt. Dabei ist jedoch die Verlagerungsachse 35 nicht senkrecht zu der ersten Drehachse 29, sondern entspricht der ersten Drehachse 29. Darüber hinaus wird die Drehbewegung der Drehachse 29 nicht mittels einer Zahnradübersetzung auf die Drehachse 30 übertragen, sondern mittels eines Kulissengetriebes übertragen.

Weiter ist es möglich, dass, unabhängig von der Ausführung der Verstelleinrichtung 9, bei mindestens zwei Federn 40, wie in der Figur 3D dargestellt, nur eine Feder 40 mit dem zweiten Aufhängeelement 38 verbunden ist und die andere Feder 40 direkt mit der ersten Verbindungsschwinge 5 verbunden ist. Hierdurch umfasst die Federungsvorrichtung 1 eine gewisse Mindestfederkraft, gegeben durch die Feder 40, die nicht mit der Verstelleinrichtung 9 verbunden ist.

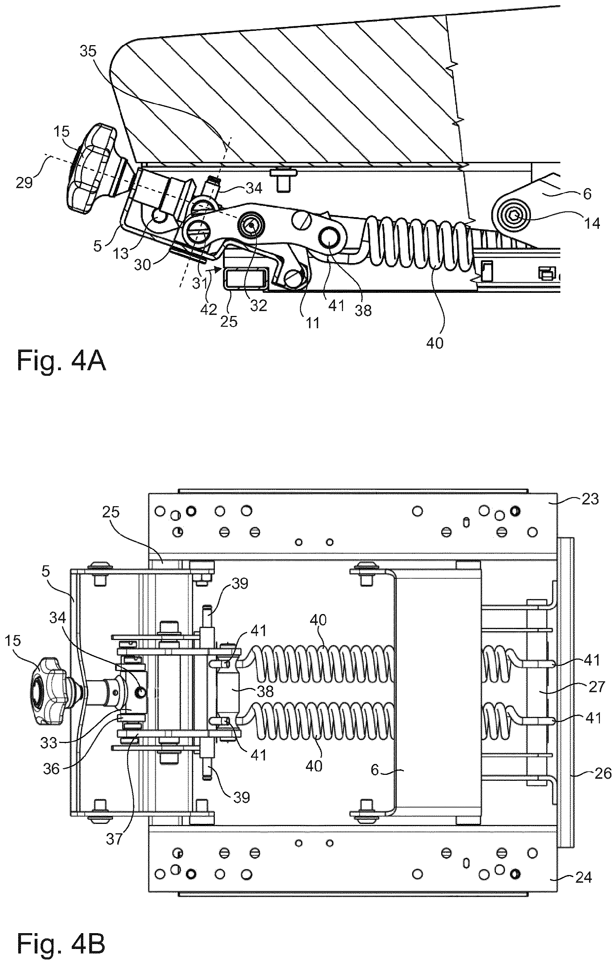

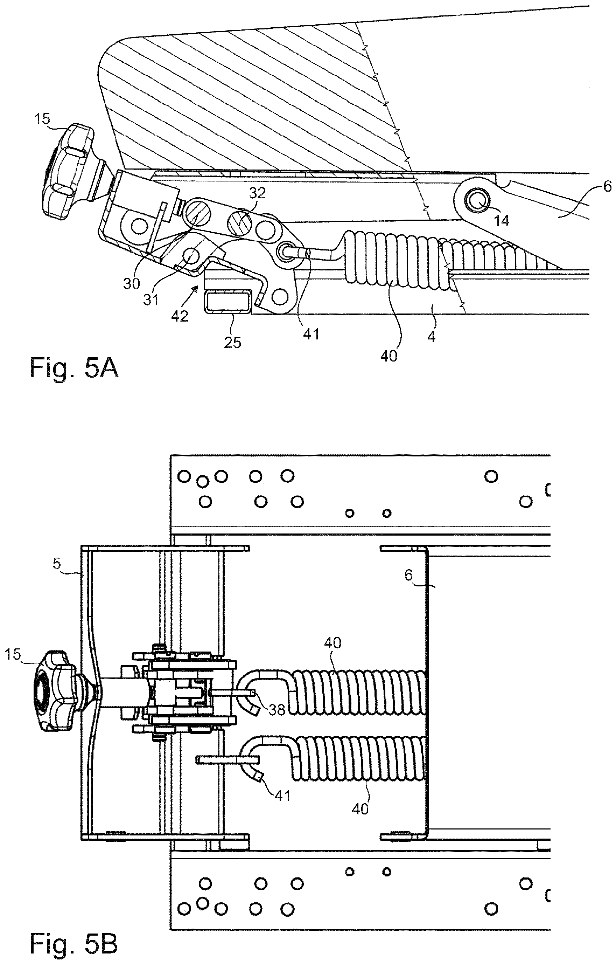

In den Figuren 4A und 4B ist noch einmal die Ausführungsform gemäß der Figur 3B und in den Figuren 5A und 5B die Ausführungsform gemäß Figur 3D dargestellt und in einer Seitenansicht und in einer Draufsicht gezeigt.

Wie insbesondere den Figuren 4A und 5A zu entnehmen ist, weist die erste Verbindungsschwinge 5 eine Ausnehmung 42 auf, die im Wesentlichen dem Querelement 25 entspricht, so dass die erste Verbindungsschwinge 5 in Höhenrichtung H möglichst weit nach unten schwenkbar ist. Weiter kann durch diese Ausnehmung 42 insgesamt die Federungsvorrichtung 1 kleiner dimensioniert werden, so sonst die erste Verbindungsschwinge 5 nicht so weit absenkbar ist. Durch die Ausnehmung 42 ist dies jedoch möglich, so wie es den Figuren 4A und 5A zu entnehmen ist. Die Ausführungsform der Verstelleinrichtung 9 der Figuren 3D, 5A und 5B hat gegenüber der Ausführungsform der Verstelleinrichtung 9 gemäß den Figuren 3B, 4A und 4B eine verringerte Reibung der Komponenten, so dass die Verstelleinrichtung 9 mit weniger Kraft betätigbar ist.

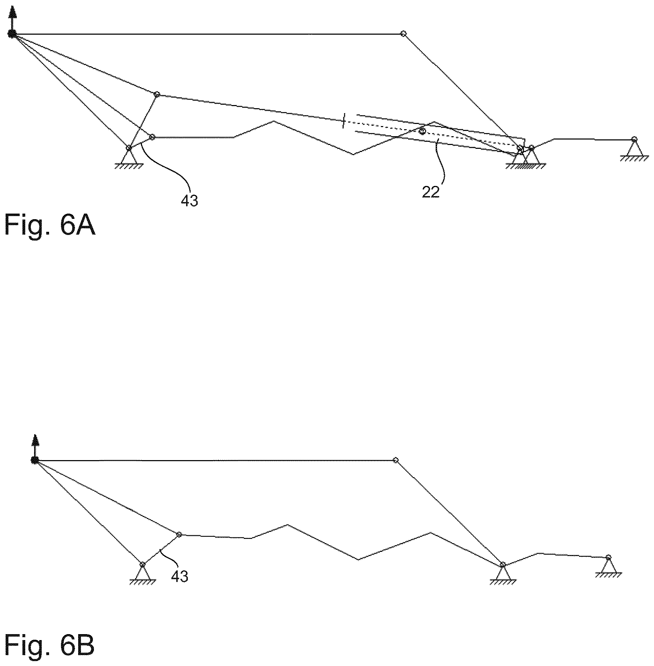

In den Figuren 6A und 6B wird die Kinematik der Federungsvorrichtung 1 schematisch dargestellt, wobei die Federungsvorrichtung 1 mit einem echten Parallelogramm ausgebildet ist. Die Figur 6A zeigt dabei die Situation für einen leichten Fahrer, die Figur 6B die Situation für einen schweren Fahrer.

Wie klar aus einem Vergleich der beiden Figuren 6A und 6B zu erkennen ist, wurde durch die Betätigung der Verstelleinrichtung 9 eine Hebellänge 43 geändert. Für einen leichten Fahrer ist dieser Hebel 43 kürzer als für einen schweren Fahrer, so dass bei einem schweren Fahrer mit Kraft bzw. Energie durch die Feder 40 aufgenommen werden kann. Die resultierende Hebellänge 43 ist daher kürzer.

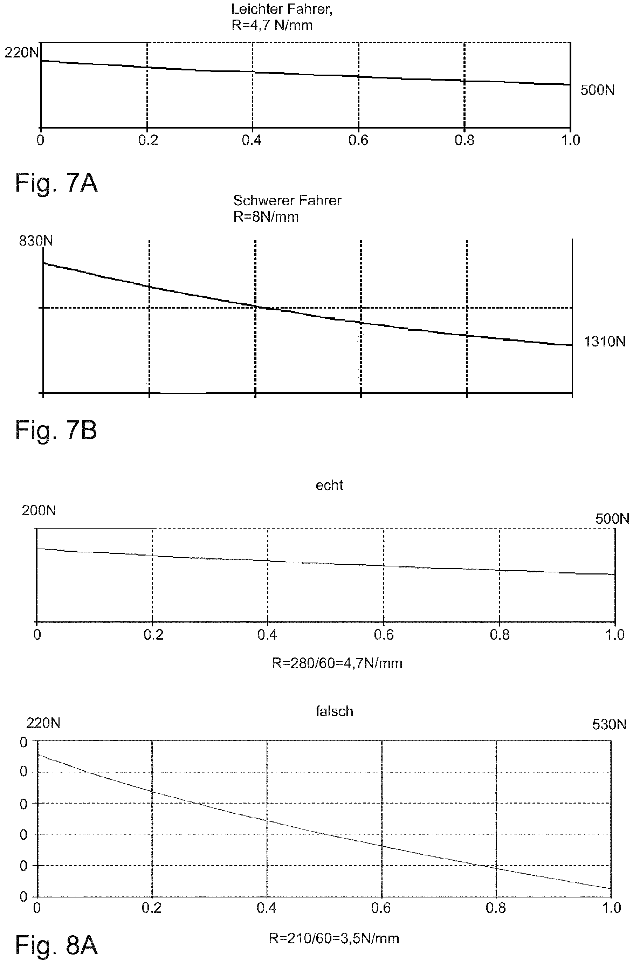

Die Kennlinie der Federung für einen leichten Fahrer ist gemäß Figur 7A, für einen schweren Fahrer gemäß Figur 7B gezeigt. Die angegebenen Werte entsprechen dabei lediglich Beispielwerten, es können auch andere Werte Verwendung finden.

Die folgenden Figuren beziehen sich auf eine Ausführungsform mit einem falschen Parallelogramm und zwei Federn 40, wobei eine erste Feder 40 mit der Verstelleinrichtung 9 verbunden ist und entsprechend in seiner Lage verändert werden kann, wobei die zweite Feder 40 mit der ersten Verbindungsschwinge 5 direkt verbunden ist und nicht verstellt werden kann. Die gezeigten Kennlinien beziehen sich auf die gesamte Federung, also auf beide Federn 40.

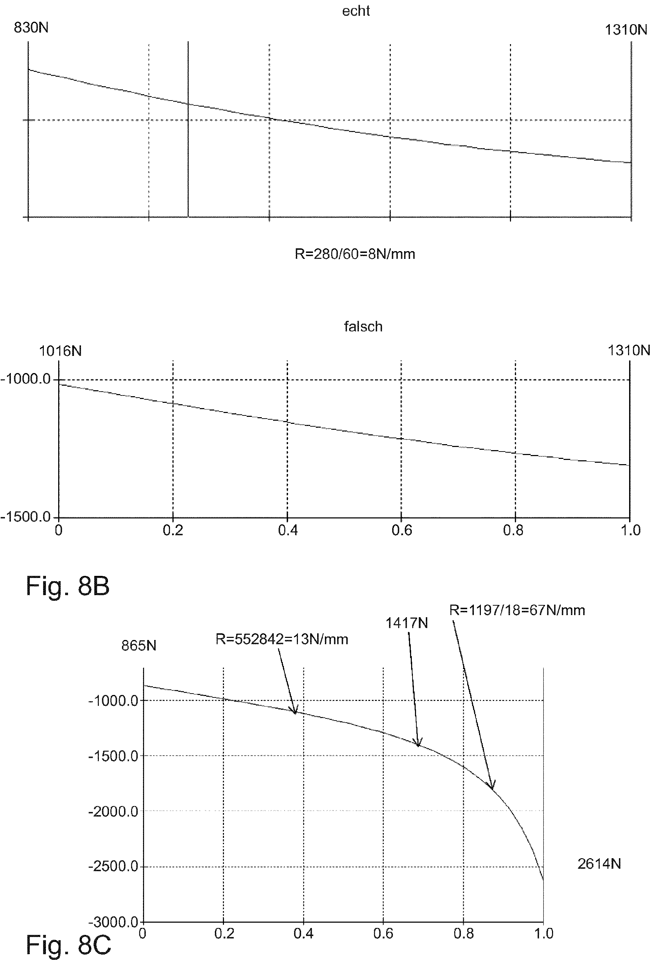

Die in den Figuren 8A und 8B gezeigten Kennlinien zeigen einen Vergleich zwischen der Federungsvorrichtung 1 mit einem echten Parallelogramm und einem falschen Parallelogramm sowohl für einen leichten Fahrer als auch einen schweren Fahrer, der auf die Federungsvorrichtung 1 in Längsrichtung gesehen vorne auf die Federungsvorrichtung 1 einwirkt. Die Kennlinie für das echte Parallelogramm ist jeweils links, die Kennlinie für das falsche Parallelogramm jeweils rechts angeordnet.

Wie aus einem Vergleich zu erkennen ist, ist die Federrate des echten Parallelogramms deutlich anders gegenüber dem falschen Parallelogramm und entspricht mehr dem Fahrkomfort des jeweiligen Benutzers.

Da jedoch ein schwerer Fahrer im Allgemeinen größer ist als ein leichter Fahrer, wird der schwere Fahrer weiter hinten auf die Federungsvorrichtung 1 einwirken. Dieses wird in der Figur 8C dargestellt. Wie zu erkennen ist, ist die Kennlinie der Federung sehr progressiv auslegbar und ausgelegt. Dabei ist die Kennlinie bis zu 1417 N etwa linear, danach verändert sie sich stark. Durch diese starke progressive Auslegung kann zusätzlich Gewicht der Federungsvorrichtung 1 eingespart werden, da auf Anschlagspuffer verzichtet werden kann.

### Bezugszeichenliste

- 1: Federungsvorrichtung
- 2: Fahrzeugsitz
- 3: Federungsoberteil
- 3': vorderer Bereich des Federungsoberteils
- 3": hinterer Bereich des Federungsoberteils
- 4: Federungsunterteil
- 4': vorderer Bereich des Federungsunterteils
- 4": hinterer Bereich des Federungsunterteils
- 5: erste Verbindungsschwinge
- 6: zweite Verbindungsschwinge
- 7: erste Federeinheit
- 8: erster Endbereich der ersten Federeinheit
- 9: Verstelleinrichtung
- 10: zweiter Endbereich der ersten Federeinheit
- 11: erste Schwenkachse
- 12: zweite Schwenkachse
- 13: dritte Schwenkachse
- 14: vierte Schwenkachse
- 15: Drehhebel
- 16: Kraftrichtung
- 17: Krafthebel
- 18: Unterseite Federungsunterteil
- 19: Oberseite Federungsoberteil
- 20: Linearverschiebeeinrichtung
- 21: Aufhängevorrichtung
- 22: Dämpfer
- 23: Längselement
- 24: Längselement
- 25: Querelement
- 26: Querelement
- 27: erstes Aufhängeelement
- 28: erstes Dämpferaufhängeelement
- 29: erste Drehachse
- 30: zweite Drehachse
- 31: dritte Drehachse
- 32: vierte Drehachse
- 33: Verstellelement
- 34: Gewindestange
- 35: Verlagerungsachse
- 36: erstes Hebelelement
- 37: zweites Hebelelement
- 38: zweites Aufhängeelement
- 39: zweites Dämpferaufhängeelement
- 40: Feder
- 41: Öse
- 42: Ausnehmung
- 43: Hebellänge
- B: Breitenrichtung
- L: Längsrichtung
- H: Höhenrichtung

## Patentansprüche

1. Federungsvorrichtung (1), insbesondere für einen Fahrzeugsitz (2), umfassend ein Federungsoberteil (3) und ein Federungsunterteil (4), welche durch eine erste Verbindungsschwinge (5) und eine zweite Verbindungsschwinge (6) miteinander verbindbar sind, wobei
eine erste Federeinheit (7) mit einem ersten Endbereich (8) einerseits mittels einer Verstelleinrichtung (9) mit der ersten Verbindungsschwinge (5) und mit einem zweiten Endbereich (10) andererseits mit dem Federungsunterteil (4) verbindbar ist, wobei mittels der Verstelleinrichtung (9) eine Position der ersten Federeinheit (7) verstellbar ist, um eine Federkraft und eine Federrate der Federungsvorrichtung (1) zu verändern, wobei die Verstelleinrichtung (9) einen relativ zur ersten Verbindungsschwinge (5) ortsfesten Drehhebel (15) aufweist, welcher um eine erste Drehachse (29), die relativ zu der ersten Verbindungsschwinge (5) ortsfest ist, drehbar gelagert ist, und ein Verstellelement (33) aufweist, das bei einer Verlagerung entlang einer Verlagerungsachse (35) verlagerbar ist, **dadurch gekennzeichnet, dass** an dem Verstellelement (33) mittels einer zweiten Drehachse (30) ein erstes Hebelelement (36) schwenkbar angeordnet ist, wobei an dem ersten Hebelelement (36) ein zweites Hebelelement (37) mittels einer dritten Drehachse (31) schwenkbar angeordnet ist und das zweite Hebelelement (37) mittels einer vierten Drehachse (32) schwenkbar mit der ersten Verbindungsschwinge (5) verbunden ist.

2. Federungsvorrichtung (1) nach Anspruch 1,
**dadurch gekennzeichnet, dass**
der erste Endbereich (8) der ersten Federeinheit (7) mittels der Verstelleinrichtung (9) in einer Position verstellbar ist, wobei eine Position des zweiten Endbereichs (10) im Wesentlichen konstant ist.

3. Federungsvorrichtung (1) nach Anspruch 1 oder 2,
d**adurch gekennzeichnet,** dass
die Federungsvorrichtung (1) mindestens einen Dämpfer (22) aufweist, wobei ein erster Endbereich des Dämpfers (22) mit der Verstelleinrichtung (9) verbindbar ist.

4. Federungsvorrichtung (1) nach einem der vorhergehenden Ansprüchen,
**dadurch gekennzeichnet, dass**
die zweite Verbindungsschwinge (6) länger als die erste Verbindungsschwinge (5) ausgestaltet ist.

5. Federungsvorrichtung (1) nach einem der vorhergehenden Ansprüche,
**dadurch gekennzeichnet, dass**
die Verlagerungsachse (35) der ersten Drehachse (29) entspricht.

6. Federungsvorrichtung (1) nach einem der vorhergehenden Ansprüche,
**dadurch gekennzeichnet, dass**
die erste Federeinheit (7) durch eine Feder ausgebildet ist, wobei vorzugsweise die Feder eine Zugfeder ist.

7. Federungsvorrichtung (1) nach einem der vorhergehenden Ansprüche,
**dadurch gekennzeichnet, dass**
die erste Federeinheit (7) mit dem zweiten Hebelelement (37) zumindest wirkverbunden ist.

## Claims

1. Suspension device (1), in particular for a vehicle seat (2), comprising an upper suspension part (3) and a lower suspension part (4), which can be connected to one another by a first swivelling connector (5) and a second swivelling connector (6), wherein
a first spring unit (7) can be connected in a first end region (8) on the one hand by means of an adjusting device (9) to the first swivelling connector (5) and can be connected in a second end region (10) on the other hand to the lower suspension part (4), wherein by means of the adjusting device (9) the position of the first spring unit (7) can be adjusted, in order to adjust the spring force and the spring rate of the suspension device (1),
wherein the adjusting device (9) comprises a rotary lever (15) which is stationary relative to the first swivelling connector (5), which rotary lever is rotatably mounted about a first axis of rotation (29), which is stationary relative to the first swivelling connector (5), and comprises an adjusting element (33) which can be displaced on displacement along a displacement axis (35),
**characterised in that**
a first lever element (36) is arranged pivotably on the adjusting element (33) by means of a second axis of rotation (30), wherein a second lever element (37) is arranged pivotably on the first lever element (36) by means of a third axis of rotation (31) and the second lever element (37) is connected pivotably to the first swivelling connector (5) by means of a fourth axis of rotation (32).

2. Suspension device (1) according to claim 1,
**characterised in that**
the first end region (8) of the first spring unit (7) can be adjusted by means of the adjusting device (9) in a position, wherein a position of the second end region (10) is essentially constant.

3. Suspension device (1) according to either claim 1 or claim 2,
**characterised in that**
the suspension device (1) comprises at least one damper (22), wherein a first end region of the damper (22) can be connected to the adjusting device (9).

4. Suspension device (1) according to any of the preceding claims,
**characterised in that**
the second swivelling connector (6) is designed to be longer than the first swivelling connector (5).

5. Suspension device (1) according to any of the preceding claims,
**characterised in that**
the displacement axis (35) corresponds to the first axis of rotation (29).

6. Suspension device (1) according to any of the preceding claims,
**characterised in that**
the first spring unit (7) is formed by a spring, wherein preferably the spring is a tension spring.

7. Suspension device (1) according to any of the preceding claims,
**characterised in that**
the first spring unit (7) is at least connected operatively to the second lever element (37).

## Revendications

1. Dispositif de suspension (1), en particulier pour un siège de véhicule (2), comportant une partie supérieure de suspension (3) et une partie inférieure de suspension (4), lesquelles sont aptes à être reliées l'une à l'autre par un premier bras oscillant de liaison (5) et un second bras oscillant de liaison (6), dans lequel
une première unité à ressort (7) est apte à être reliée par une première région d'extrémité (8) d'une part au premier bras oscillant de liaison (5) au moyen d'un dispositif de réglage (9), et par une seconde région d'extrémité (10) d'autre part à la partie inférieure de suspension (4), dans lequel, au moyen du dispositif de réglage (9), une position de la première unité à ressort (7) est réglable pour modifier une force de ressort et une constante de rappel du dispositif de suspension (1), dans lequel le dispositif de réglage (9) présente un levier tournant (15) fixe par rapport au premier bras oscillant de liaison (5), lequel levier tournant (15) est monté à rotation autour d'un premier axe de rotation (29) qui est fixe par rapport au premier bras oscillant de liaison (5), et présente un élément de réglage (33) qui est déplaçable lors d'un déplacement le long d'un axe de déplacement (35),
**caractérisé par le fait que**, sur l'élément de réglage (33), un premier élément levier (36) est disposé apte à pivoter au moyen d'un deuxième axe de rotation (30), dans lequel, sur le premier élément levier (36), un second élément levier (37) est disposé apte à pivoter au moyen d'un troisième axe de rotation (31), et le second élément levier (37) est relié à pivotement au premier bras oscillant de liaison (5) au moyen d'un quatrième axe de rotation (32).

2. Dispositif de suspension (1) selon la revendication 1,
**caractérisé par le fait que**
la première région d'extrémité (8) de la première unité à ressort (7) est réglable en position au moyen du dispositif de réglage (9), une position de la seconde région d'extrémité (10) étant sensiblement constante.

3. Dispositif de suspension (1) selon l'une des revendications 1 ou 2,
**caractérisé par le fait que**
le dispositif de suspension (1) présente au moins un amortisseur (22), une première région d'extrémité de l'amortisseur (22) étant apte à être reliée au dispositif de réglage (9).

4. Dispositif de suspension (1) selon l'une des revendications précédentes,
**caractérisé par le fait que**
le second bras oscillant de liaison (6) est conçu pour être plus long que le premier bras oscillant de liaison (5).

5. Dispositif de suspension (1) selon l'une des revendications précédentes,
**caractérisé par le fait que**
l'axe de déplacement (35) correspond au premier axe de rotation (29).

6. Dispositif de suspension (1) selon l'une des revendications précédentes,
**caractérisé par le fait que**
la première unité à ressort (7) est formée par un ressort, le ressort étant, de préférence, un ressort de traction.

7. Dispositif de suspension (1) selon l'une des revendications précédentes,
**caractérisé par le fait que**
la première unité à ressort (7) est au moins reliée de manière fonctionnelle au second élément levier (37).
